# EUROPEAN PATENT SPECIFICATION

(11) **EP 2 772 019 B1**
(45) Date of publication and mention of the grant of the patent: **20.12.2017**
(21) Application number: 12843058.4
(22) Date of filing: 24.10.2012
(51) Int. Cl.: H04L 12/26, H04L 12/24, H04L 29/06

(54) **METHODS, SYSTEMS, AND COMPUTER READABLE MEDIA FOR TESTING A DIAMETER ROUTING NODE**
VERFAHREN, SYSTEME, UND COMPUTERLESBARE MEDIEN ZUM TESTEN EINES DURCHMESSERROUTINGKNOTENS
PROCÉDÉS, SYSTÈMES, ET SUPPORT LISIBLE PAR ORDINATEUR POUR L'ESSAI D'UN NOEUD DE ROUTAGE DIAMETER

(30) Priority: 24.10.2011 US 201161550901 P
(43) Date of publication of application: 03.09.2014
(73) Proprietor: Tekelec, Inc., Morrisville, NC 27560 (US)
(72) Inventor: KHADRI, Seetharaman, Cary, NC 27519 (US); RAO, Srikanth, Nanjund, Cary, NC 27513 (US); MARSICO, Peter, J., Chapel Hill, NC 27516 (US)
(74) Representative: Gill Jennings & Every LLP
(86) International application number: PCT/US2012/061657
(87) International publication number: WO 2013/063091

(56) References cited:
- GB-A- 2 426 145
- US-A- 5 583 848
- US-A1- 2008 137 543
- US-A1- 2008 151 905
- US-A1- 2009 232 011
- US-A1- 2009 232 011
- US-A1- 2011 116 382
- US-A1- 2011 202 612
- Introduction: "Seagull - Open Source tool for IMS testing", , 1 June 2006 (2006-06-01), XP055195213, Retrieved from the Internet: URL:http://gull.sf.net/doc/WP_Seagull_Open _Source_tool_for_IMS_testing.pdf [retrieved on 2015-06-11]
- Tekelec: "Diameter Signaling Router Diameter Configuration, Maintenance, and DSR Applications Guide 910-6573-001 Revision B", , 1 December 2012 (2012-12-01), XP055194256, Retrieved from the Internet: URL:https://docs.oracle.com/cd/E52435_01/d ocs.40/910-6573-001_rev_b.pdf [retrieved on 2015-06-08]
- DJURIC, DARIO ET AL.: 'Open Diameter Conformance Testing' COMMUNICATION SYSTEMS, NETWORKS AND DIGITAL SIGNAL PROCESSING, 6TH INTERNATIONAL SYMPOSIUM 25 July 2008, pages 124 - 128, XP031314820

## Description

### TECHNICAL FIELD

The subject matter described herein relates to methods and systems for testing communications nodes. More particularly, the subject matter described herein relates to methods, systems, and computer readable media for testing a Diameter routing node.

### BACKGROUND

Diameter is an authentication, authorization and accounting (AAA) protocol for computer networks, and is a successor to Radius. The Diameter base protocol is defined in International Engineering Task Force (IETF) request for comments (RFC) 3588 which is incorporated by reference herein in its entirety. Diameter messages use a per user framework and exist in the format of request-answer messages. Diameter answer messages travel back to the request source via the same path through which the request message was routed using hop-by-hop transport.

Diameter messages may be exchanged between Diameter nodes for performing various functions. For example, a mobility management entity (MME) and a home subscriber server (HSS) may interact for authentication, authorization, and/or accounting (AAA) purposes. Since communications networks use Diameter messages to perform a variety of functions, it is important to make sure that Diameter nodes are working correctly and as expected.

Accordingly, there exists a need for methods, systems, and computer readable media for testing a Diameter routing node.

US2009/232011 A1 (LI JIJUN [CN] ET AL) 17 September 2009 (2009-09-17), discloses background information.

GB2426145 A (AGILENT TECHNOLOGIES INC [US]) 15 November 2006 (2006-11-15), discloses background information.

Introduction "Seagull - Open Source tool for IMS testing", 1 June 2006 (2006-06-01), Retrieved from the Internet: URL:http://gull.sf.net/doc/WP Seagull Open Source tool for IMS tasting.p df [retrieved on 2015-06-11], discloses background information.

US2011/116382 A1 (MCCANN, THOMAS M. ET AL.) 19 May 2011 (2011-05-19), discloses background information.

### SUMMARY

According to one aspect, there is provided a method as set out in claim 1.

According to another aspect, there is provided a system as set out in claim 7.

According to yet another aspect, there is provided a non-transitory computer readable medium as set out in claim 13.

The subject matter described herein can be implemented in software in combination with hardware and/or firmware. For example, the subject matter described herein can be implemented in software executed by a processor. In one exemplary implementation, the subject matter described herein may be implemented using a computer readable medium having stored thereon computer executable instructions that when executed by the processor of a computer control the computer to perform steps. Exemplary computer readable media suitable for implementing the subject matter described herein include non-transitory devices, such as disk memory devices, chip memory devices, programmable logic devices, and application specific integrated circuits. In addition, a computer readable medium that implements the subject matter described herein may be located on a single device or computing platform or may be distributed across multiple devices or computing platforms.

As used herein, the term "node" refers to a physical computing platform including one or more processors and memory.

As used herein, the terms "function" or "module" refer to software in combination with hardware and/or firmware for implementing features described herein.

### BRIEF DESCRIPTION OF THE DRAWINGS

Preferred embodiments of the subject matter described herein will now be explained with reference to the accompanying drawings, wherein like reference numerals represent like parts, of which:
Figure 1 is a diagram illustrating connectivity between various nodes and a Diameter routing node according to an embodiment of the subject matter described herein;
Figure 2 is a diagram illustrating an exemplary Diameter routing node according to an embodiment of the subject matter described herein;
Figure 3 is a diagram illustrating exemplary processing of a Diameter message according to an embodiment of the subject matter described herein;
Figure 4 is a diagram illustrating an exemplary log report according to an embodiment of the subject matter described herein; and
Figure 5 is a flow chart illustrating an exemplary process for testing a Diameter routing node according to an embodiment of the subject matter described herein.

### DETAILED DESCRIPTION

In accordance with the subject matter disclosed herein, systems, methods, and computer readable media are provided for testing a Diameter routing node. Advantageously, aspects of the present subject matter described herein can be used for performing testing of a network node in a live network. For example, a DSR in accordance with aspects of the present subject matter described herein may allow an operator or a test module (e.g., a traffic generator) to send a Diameter Message via a test connection. After receiving the Diameter message via the test connection, the DSR may mark the Diameter message or otherwise identify the Diameter message as a test message. As the Diameter test message traverses the DSR, log messages may be generated at various points during processing (e.g., points may be designated in software and may be referred to as tracepoints). In some embodiments, the Diameter test message may include content or other information for determining various aspects of testing, such as which tracepoints generate or trigger log messages, which log messages are sent to a destination or stored, how the test message is processed, and/or whether the test message is sent to an egress destination or discarded. By differentiating between test messages and normal (e.g., non-test) messages, aspects of the subject matter described herein may be used to test a DSR that is concurrently routing normal Diameter traffic in a live network, e.g., without taking the DSR offline for testing.

Reference will now be made in detail to exemplary embodiments of the subject matter described herein, examples of which are illustrated in the accompanying drawings. Wherever possible, the same reference numbers will be used throughout the drawings to refer to the same or like parts.

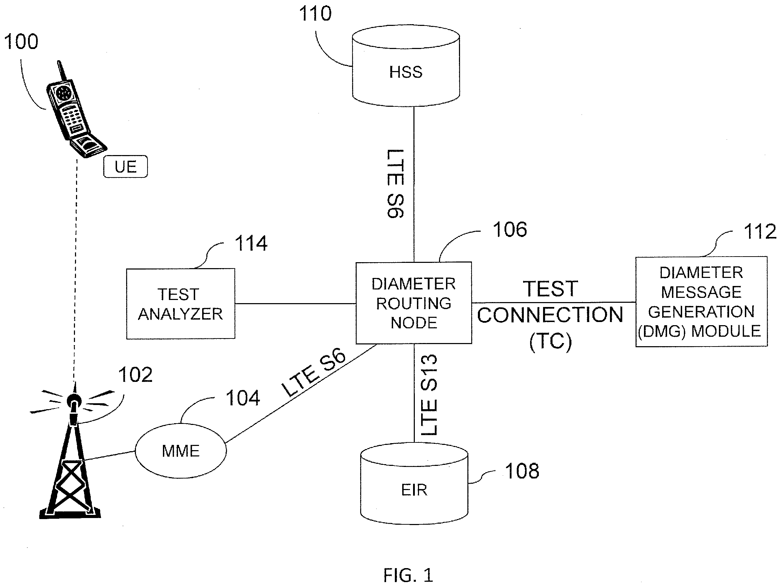

Figure 1 is a diagram illustrating connectivity between various nodes and a Diameter routing node (also referred to herein as a Diameter router or a Diameter signaling router (DSR)) **106** according to an embodiment of the subject matter described herein. In the embodiment illustrated in Figure 1, a communications network having user equipment (UE) **100,** an ENode B **102** and various Diameter nodes, including DSR **106,** a mobility management entity (MME) **104,** a home subscriber server (HSS) **110** and an equipment identity register (EIR) **108,** is depicted. Diameter nodes may be nodes capable of implementing or using a Diameter protocol. For example, Diameter nodes may include DSR **106,** MME **104,** HSS **110,** an authentication, authorization, and accounting (AAA) server, a Bearer Binding and Event Reporting Function (BBERF), a serving gateway (SGW), a packet data network gateway (PDN GW), a charging data function (CDF), an online charging system, an offline charging system, a policy charging enforcement function (PCEF), a policy charging and rules function (PCRF), a subscriber profile repository (SPR), a Diameter agent, a network node, a policy engine, a policy server, an application function (AF), an application server, a Diameter signaling agent, a long term evolution (LTE) node, an Internet protocol (IP) multimedia subsystem (IMS) network node, a server, a correlation node, a node, a database, a signaling gateway, a gateway, a monitoring node, a Diameter message processor, a data collection platform, a multi-protocol signaling gateway, a multi-protocol signaling router, or a computing platform. Examples of DSR **106** include, but are not limited to, a Diameter routing node, a Diameter routing agent, a Diameter relay agent, a Diameter redirect agent, a Diameter translation agent, a Diameter proxy agent.

DSR **106** may include functionality for receiving, processing and/or routing various messages (e.g., protocol data units (PDUs)) and may include various communications interfaces for communication with Diameter nodes, e.g., 3rd Generation Partnership Project (3GPP) LTE communications interfaces and other (e.g., non-LTE) communications interfaces. In some embodiments, receiving, processing, and/or routing functionality may be included in one or more modules. For example, DSR **106** may include or have access to one or more modules for receiving Diameter signaling messages associated with multiple different Diameter signaling interfaces, e.g., S9, S6a, S11, Cx, and Dx.

In some embodiments, DSR **106** may receive Diameter messages via other Diameter interfaces. For example, DSR **106** may receive Diameter message via an LTE interface, an IMS interface, an IETF specification interface, a 3GPP specification interface, a Third Generation Partnership Project 2 (3GPP2) specification interface, a European Telecommunications Standards Institute (ETSI) specification interface, an International Telecommunications Union (ITU) specification interface, a PacketCable specification interface, a MultiService Forum (MSF) specification interface, an Sh interface, a Dx interface, a Ro interface, a Rf interface, an Sp interface, a Gx interface, a Rx interface, a Gz interface, a Gy interface, a Gq interface, a Zh interface, a Dz interface, a Zn interface, a Ty interface, a Tx interface, a Dw interface, a Wa interface, a Wd interface, a Wx interface, a Wm interface, a Wg interface, a Pr interface, a Gr interface, a Gr+ interface, a Gi interface, a Wo interface, a Wf interface, a Re interface, an S6 interface, an S2 interface, an SW interface, an Sta interface, an S7 interface, an H2 interface, an E2 interface, an E4 interface, an E5 interface, a A3 interface, a A4 interface, a Rr interface, a Gq' interface, a TC-6 interface, a TC-7 interface, a TC-8 interface, a TC-9 interface, a TC-10 interface, a TC-11 interface, a DB-0 interface, a DB-2 interface, a BI-1 interface, a LOC-1 interface, an Rw interface, a Pkt-mm-2 interface, a P-CSCF-PAM interface, a Pkt-laes-2 interface, an MM10 interface, an MZ interface, a Gmb interface, or a Zn' interface.

In some embodiments, DSR **106** may include functionality for communicating with a Diameter message generation (DMG) module **112.** DMG module **112** may be any suitable entity (e.g., software executing on a processor) for generating and sending Diameter messages. For example, DMG module **112** may be any message generation platform, such as a computing device running Seagull software or a multi-protocol traffic generator node. In some embodiments, DMG module **112** may generate and send Diameter messages in response to a test connection between DSR **106** and DMG module **112.** For example, a network operator may configure a test connection through the use of a graphical user interface (GUI). Using configuration information, DSR **106** or another module may establish a test connection with DMG module **112** via various interfaces, such as one or more LTE interfaces mentioned above.

In some embodiments, DSR **106** may include functionality for testing one or more processing features associated with DSR **106.** For example, DSR **106** may include a Diameter mediation feature for diagnosing or testing mediation rules before they are subjected to live traffic in the network. When testing mediation processing or another type of processing, DSR **106** may log rules applied, actions taken, and/or other diagnostics information associated with a test message injected into the system. DSR **106** may also provide or make accessible reports based on these log messages to one or more modules or nodes, such as test analyzer **114.**

In some embodiments, DSR **106** and/or modules therein may include functionality for logging or collecting information associated with the handling of a Diameter message. For example, DSR **106** and/or modules therein may include software code (e.g., tracepoints) that when reached (e.g., executed) generate or trigger log messages or other data collection mechanisms. In some embodiments, tracepoints or information to be collected may be selected or preconfigured based on various factors, such as resource availability, a test type, or user configuration. In some embodiments, various modules and/or nodes (e.g., test analyzer **114**) may access and use the collected information for various purposes, such as whether to introduce new firewall or mediation rules or to determine whether a harmonization policy is ready for deployment in a live network.

In some embodiments, DSR **106** may be configured to allow testing during normal or live traffic conditions: For example, DSR **106** may perform testing, including logging of test-related information, while also routing or processing Diameter messages associated with Diameter peer nodes and/or UE **102.** DSR **106** may include an "auto stop" feature for stopping or pausing testing associated with Diameter processing. An "auto stop" feature may be usable for stopping or pausing a diagnose mode or a test mode, e.g., after a configured number of Diameter messages is received via the test connection or when resources utilization for normal traffic reaches a certain threshold. DSR **106** may include an "auto start" feature for restarting or un-pausing a diagnose mode or test mode, e.g., when resources utilization for normal traffic goes below a certain threshold.

In some embodiments, DSR **106,** or a module therein, may maintain a PDU count parameter for each test connection. At an initial time (e.g., when a testing period starts), the PDU count parameter for a test connection may be set at a maximum value. When a Diameter message is received via the test connection, the Diameter message (e.g., PDU) may be modified to include a test indicator parameter and the PDU count may be decremented. When a PDU count reaches zero, the testing period may end, e.g., no more Diameter messages associated with the testing period may be processed.

In some embodiments, DSR **106,** or a module therein, may maintain a maximum test PDUs parameter. A maximum test PDUs parameter may be a system wide parameter and may indicate the maximum number of Diameter messages (e.g., PDUs) allowed via a test connection for every testing period (e.g., test run). In some embodiments, the parameter may be preconfigured or may be based on available resources associated with DSR **106** or test system.

In some embodiments, DSR **106,** or a module therein, may maintain a maximum test connections parameter. A maximum test connections parameter may be a system wide parameter and may indicate the maximum number of test connections that can be configured in the system. In some embodiments, the parameter may be preconfigured or may be based on available resources associated with DSR **106** or test system.

In some embodiments, DSR **106,** or a module therein, may maintain a maximum simultaneous test connections parameter. A maximum simultaneous test connections parameter may be a system wide parameter and may indicate the maximum number of connections number of connections that can be in test mode simultaneously. In some embodiments, the parameter may be preconfigured or may be based on available resources associated with DSR **106** or test system.

In some embodiments, DSR **106** may be configured to prevent or prohibit traffic arriving on normal connections (e.g., non-test connections) from being transmitted via a test connection or to a test-related destination. For example, a Diameter message received from MME **104** having an intended destination associated with a test egress connection may be discarded. DSR **106** may also be configured to prevent or prohibit traffic arriving on test connections from being transmitted via a normal connection or to a non-test-related destination. For example, a Diameter message received from DMG module **112** with an intended destination of HSS **110** may be discarded.

In some embodiments, DSR **106** may include functionality for communicating with a test analyzer **114.** Test analyzer **114** may be any suitable entity (e.g., software executing on a processor, a server, or other node or module) for configuring tests, initiating tests and/or analyzing tests results. For example, test analyzer **114** may be an operations, administration, and management (OAM) node or other network node. In some embodiments, test analyzer **114** may trigger or schedule tests and/or may analyze test-related information. For example, test analyzer **114** may communicate via a GUI and a HTTP and/or SOAP protocol to configure a DSR **106.** In this example, the GUI may be used to configure various attributes (e.g., a maximum test connection parameter and a maximum PDUs parameter) or data associated with test connections and/or testing periods. In another example, test analyzer **114** may request and/or access diagnostic log reports associated with one or more testing periods. Test analyzer **114** may communicate with DSR **106,** DMG module **112,** and/or other nodes or modules via various interfaces, such as an LTE interface, a SOAP interface, and/or an HTTP interface.

While Figure 1 depicts DSR **106** communicating with (e.g., receiving Diameter messages from) various Diameter nodes via particular Diameter interfaces, it will be appreciated that DSR **106** may communicate with the nodes depicted and other nodes via additional and/or different interfaces.

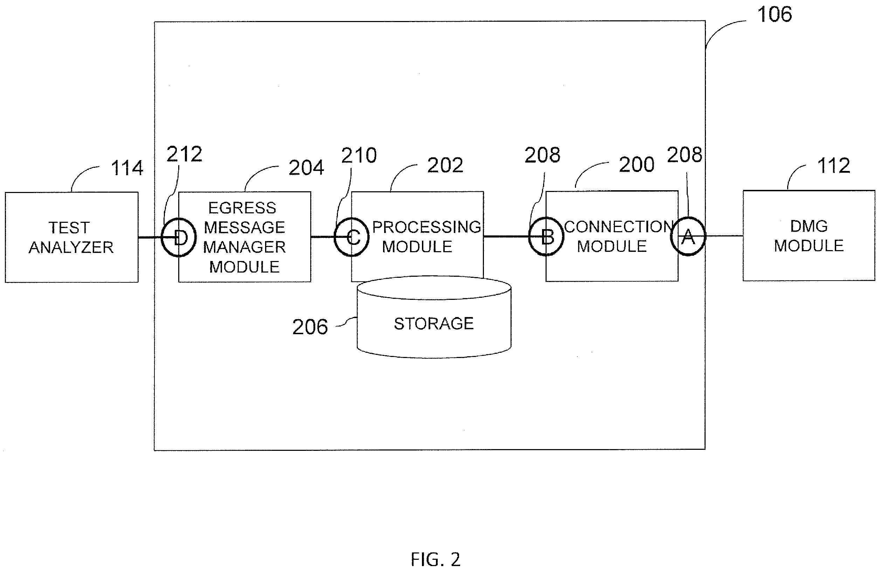

Figure 2 is a diagram illustrating an exemplary DSR **106** according to an embodiment of the subject matter described herein. In the embodiment illustrated in Figure 2, DSR **106** may include a connection module **200,** a processing module **202,** an egress message manager module (EMMM) **204,** and storage **206.** In some embodiments, DSR **106,** or a module therein, may include one or more message processors (MPs). Each MP may include functionality for receiving, copying, processing, and/or sending Diameter messages. For example, connection module **200,** processing module **202,** and/or EMMM **204** may be associated with an MP that interfaces with DMG module **112** and/or test analyzer **114.** In another example, connection module **200** and processing module **202** may be associated with one MP that interfaces with DMG module **112** and EMMM **204** may be associated with another MP that interfaces with test analyzer **114.**

Referring to Figure 2, connection module **200** may be any suitable entity for communicating with DMG module **112.** For example, connection module **200** may include an ingress interface and functionality for setting up a test connection between DSR **106** and DMG module **112.** Connection module **112** may also be configured to receive Diameter messages from DMG module **112** and/or other nodes or modules. For example, communication module **112** may be configured to receive Diameter messages from Diameter peer nodes. The Diameter messages from Diameter peer nodes may be live traffic (e.g., non-test messages) associated with UE **102** (e.g., a smartphone, a tablet computer, or other computing device of a mobile subscriber).

In some embodiments, connection module **200** or another module may be configured to mark or otherwise identify Diameter messages received via a test connection and/or from DMG module **112.** For example, a received Diameter message (e.g., from DMG module **112**) may be modified to include a test indicator parameter. A test indicator parameter may include any information for indicating that a Diameter message is a test message. In some embodiments, a test indicator parameter may be a number, character, or text. For example, a Diameter message may be modified to include or set a test message flag in a header of the Diameter message. In another example, in response to receiving a Diameter message via a test connection and/or from DMG module **112,** information identifying the message as a test message may be stored in memory (e.g., storage **206**). In this example, memory may be accessible by various modules, such as processing module **202** and EMMM **204.** Once marked or identified as a test message, a Diameter message may be treated as such by DSR **106** and/or modules therein. In some embodiments, a Diameter test message may be treated differently from a normal Diameter message. For example, a Diameter message that has been modified to include a test message flag may be internally routed to processing module **202** and/or modules within DSR **106,** but not routed to an egress destination that is distinct from DSR **106** like some normal Diameter messages. In some embodiments, a Diameter test message may receive different, additional, or the same processing as a normal Diameter message. For example, a Diameter test message may have both production mediation rules applied and test mediation rules applied, while normal or live Diameter messages may only have production mediation rules applied.

Processing module **202** may be any suitable entity (e.g., software executing on a MP) for processing Diameter messages and/or collecting information associated with processing a Diameter test message. Exemplary processing performed by processing module **202** may include firewall filtering, Diameter message mediation, Diameter protocol harmonization, and answer message generation. In an firewall filtering example, a Diameter test message may be subjected to one or more firewall filtering rules to determine the effect of the firewall filtering rules on the Diameter test message. In a protocol harmonization example, a Diameter test message may be modified according to a different version or release of the Diameter protocol associated with an intended egress destination. In an answer message generation example, a Diameter test message may trigger the generation of a Diameter answer message, which may also include a test indicator parameter (e.g., test message flag). The Diameter answer message with the test indicator parameter may be sent to an egress interface or EMMM **204.**

EMMM **204** may be any suitable entity for communicating with test analyzer **114** or another node or module. For example, EMMM **204** may include an egress interface and functionality for setting up a test or non-test connection between DSR **106** and test analyzer **114.** EMMM **204** may also be configured to send Diameter messages and/or test-related information (e.g., logs reports stored in storage **206**) to test analyzer **114** and/or other nodes or modules.

In some embodiments, EMMM **204** may inspect or examine received Diameter messages. For example, EMMM **204** may examine a received Diameter message for a test indicator parameter. In another example, EMMM **204** may examine a header portion of a Diameter message for determining an intended origination and/or destination of the Diameter message. After inspecting the Diameter message and/or gathering other information (e.g., logged information from storage **206**), EMMM **204** may perform one or more actions Exemplary actions performed by EMMM **204** may include discarding a message, directing a message to test analyzer **114** or another node or module, and/or logging some or all information contained in a message.

In some embodiments, EMMM **204** or another module may determine whether to direct a Diameter message to an egress connection (e.g., associated with an egress destination) or whether to discard the Diameter message based on whether a Diameter message is a test message and/or whether an intended destination of the Diameter message is an acceptable destination. For example, a Diameter test message associated with a test-related destination (e.g., test analyzer **114**) may be sent or directed to the test-related destination. In another example, a Diameter test message that is associated with a non-test-related destination (e.g., a Diameter peer node) may be discarded. In yet another example where processing results in the generation of an associated Diameter Answer message or other message, similar actions may be taken.

Storage **206** may include any suitable entity (e.g., a computer readable medium) for maintaining or storing log messages, or portions thereof, and/or other test-related information. DSR **106** and/or other modules or nodes may access storage **206** for obtaining log reports, log messages, or other stored information. In some embodiments, storage **206** may be integrated with DSR **106** or one or more modules therein. In some embodiments, storage **206** may be distinct from and/or external to DSR **106.**

Tracepoints A-D **208-214** may represent tracepoints or triggers for generating log messages. For example, a log message may be generated and stored in storage **206** in response to a Diameter message arriving or leaving modules within DSR **106.** In some embodiments, a log message may include information about a Diameter message and related processing information. For example, a log message associated with tracepoint A **208** may include a timestamp, a tracepoint identifier, and a description indicating that a Diameter message having a PDU identifier of '242' was received from DMG **112.** In another example, a log message associated with tracepoint D **214** may include a timestamp, tracepoint identifier, a description indicating that a Diameter message having a PDU identifier of 242' was received at EMMM **204** but an egress connection could not be determined for the Diameter message and, as such, the Diameter message was discarded.

While Figure 2 depicts various modules within DSR **106,** it will be appreciated that DSR **106** may include fewer, additional, or different modules and/or components. Further, each module depicted in Figure 2 may include fewer, additional, or different modules and/or components. For example, connection module **200** and EMMM **204** may be integrated into a communications module.

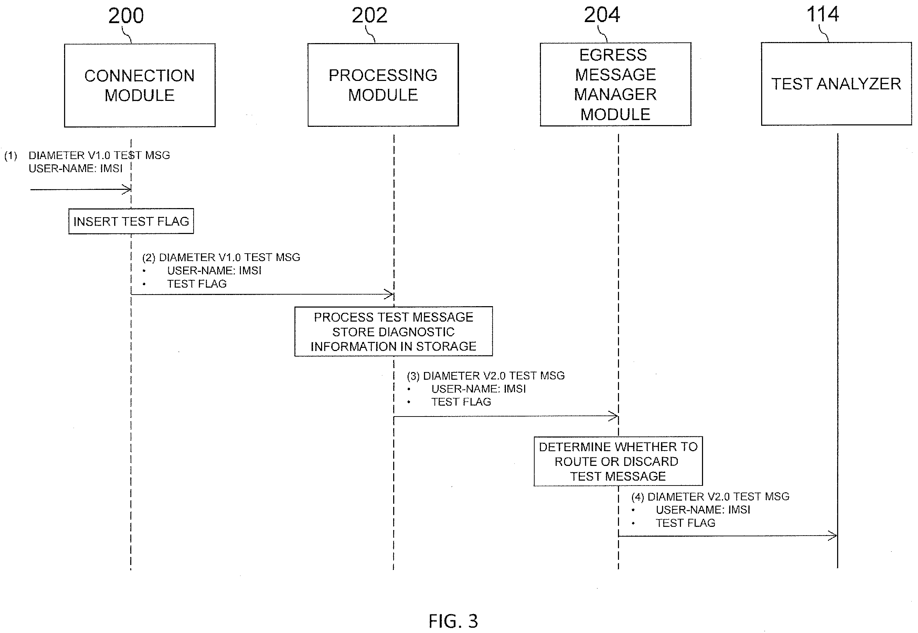

Figure 3 is a diagram illustrating exemplary processing of Diameter test message according to an embodiment of the subject matter described herein. In some embodiments, the Diameter test message may be a Diameter message or PDU associated with a test connection and/or from a DMG module **112.** For example, prior to step 1 of Figure 3, a test connection may be established between connection module **200** and DMG module **112.** In this example, the test connection may be a transport connection initiated or established by one or more messages that include a transport connection attribute (e.g., a test connection flag) for indicating that the transport connection is a test connection.

In some embodiments, a network operator or a module (e.g., test analyzer **114**) may configure a test connection or attributes associated with a test connection via a GUI or other interface. For example, a transport connection table stored in storage **206** may be modified to include information about a test connection, such as time and/or date of test connection, protocol and/or interface used for connection, and/or other information. DSR **106** may use the transport connection table to establish a test connection for receiving one or Diameter test messages.

At step 1, a Diameter test message may be received at connection module **200.** The Diameter test message may be associated with a particular protocol or Diameter version designated as version 1.0. The Diameter test message may include various attribute value pairs (AVPs), including an AVP containing an international mobile subscriber identity (IMSI).

Connection module **200** may modify the received Diameter test message to include a test message parameter or flag. The test message flag may be a bit or other parameter and may be accessible by other modules and/or node. After modifying the Diameter message to include a test message flag, the Diameter message may be sent to processing module **202.**

At step 2, the Diameter message including the test message flag may be received at processing module **202.** Processing module **202** may examine the Diameter message and determine that the Diameter message is a test message. Processing module **202** may process the Diameter message as a test message. For example, processing the Diameter test message may include performing Diameter harmonization such that the Diameter message is converted into a different protocol or format. In another example, processing the Diameter test message may include applying mediation or filter rules.

In some embodiments, processing module **202** may use information in the Diameter message and/or preconfigured information (e.g., in storage **206**) to determine testing procedures and/or conditions. For example, certain Diameter messages may be associated with different tracepoints (e.g., points during processing). At each tracepoint, information about the Diameter message and related processing information may be collected. For example, at each tracepoint, one or more log messages including diagnostic or test-related information may be generated sent to storage **206.** The collected information may be stored in storage **206** and/or correlated for log reports.

At step 3, the Diameter message or another Diameter message based on the Diameter message may be received by EMMM **204.** The received Diameter message may be associated with a particular protocol or Diameter version designated as version 2.0. EMMM **204** may examine the received Diameter message and determine that the Diameter message is a test message. EMMM **204** may also determine an intended destination for the received Diameter message. In response to determining that the Diameter message is a test message and/or determining an intended destination is associated with test analyzer **114,** EMMM **204** may determine that the received Diameter message is to be routed to test analyzer **114.**

In some embodiments, EMMM **204** may discard the received Diameter message. For example, EMMM **204** may receive and discard one or more Diameter message associated with a particular testing period. In some embodiments, EMMM **204** or another module may send a log report to test analyzer **114** or another destination. In some embodiments, log reports may be sent or requested periodically (e.g., at intervals during the testing period) or aperiodically (e.g., dynamically).

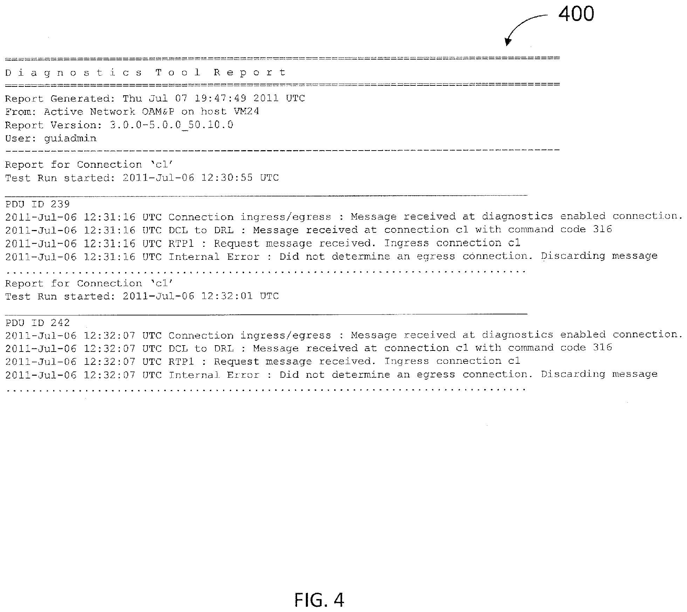

Figure 4 is a diagram illustrating an exemplary log report **400** according to an embodiment of the subject matter described herein. As stated above, DSR **106** may include functionality (e.g., an application programming interface) for configuring and performing various test-related features, such as creating test connections, starting or stopping testing, and/or selecting and generating log reports for various test runs.

In some embodiments, DSR **106** may store test-related information, such as log messages or information from log messages, in storage **206.** For example, log messages associated with one or more testing periods may be stored in a log table, database or data structure.

As depicted in Table 1 (shown below), an exemplary log table may include numerous columns or fields. For example, each log table entry may include an attribute name, a data type, a description, and a value. An attribute name field may be usable for identifying an attribute associated with a testing period, a Diameter message, or a parameter associated with DSR **106.** For example, a valid attribute name may include a timestamp, a PDU identifier (ID), a connection ID, a tracepoint ID, a message description, or a received message ID. A data type field may be useable for identifying a type of data associated with the attribute. For example, a valid data type may include a time, an integer, an integer having 64 bits, a string, or a custom type. A description field may be usable for describing the attribute or information stored. A value field may be useable for storing the value or information associated with the attribute. Additional information regarding an exemplary log table may be found in Table 1 below.

**Table 1. Log Table**

| **Attribute Name** | **Data Type** | **Description** | **Value** |
|---|---|---|---|
| timestamp | Time | The time when the log was generated. | 2011/11/03 02:34:43 |
| PDU ID | Integer (64bits) | The identifier of an incoming message. | 344164 |
| Connection ID | Integer | The identifier of an incoming connection | 23 |
| Tracepoint ID | Integer | The identifier of the tracepoint.. | 2 |
| Message Description | String | The log message that can hold up to 1024 characters. | Success |
| Received Message ID | Custom | This field stores the incoming and/or outgoing PDU captured at the indicated tracepoint. | 344164/346465 |

In some embodiments, a log table may be used in generating exemplary log report **400.** For example, test analyzer **114** may request a report regarding a particular testing period from DSR **106** or a module therein. Exemplary log report **400** may be formatted and/or include information based on various factors, such as preference of requesting entity, a test type, length of testing period, or current resource utilization at DSR **106**.

In some embodiments, exemplary log report **400** may include a timestamp indicating when the report was generated, information indicating which node generated the report, a report version, and a user identifier indicating who requested the report. Exemplary log report **400** may also include one or more testing periods for one or more test connections. For example, in exemplary report **400,** two test periods or test runs via connection 'C1' are reported. Each test run may include one or more Diameter messages. For example, in exemplary report **400,** each run includes a PDU and various log messages associated with the PDU. Each log message may include a timestamp and a description. For example, a log message may indicate progress of a PDU (e.g., Diameter message) traversing DSR **106.** For example, in exemplary report **400,** log messages for each test run indicate that each PDU is received, progresses through various processing points, and is discarded when no egress connection is determined.

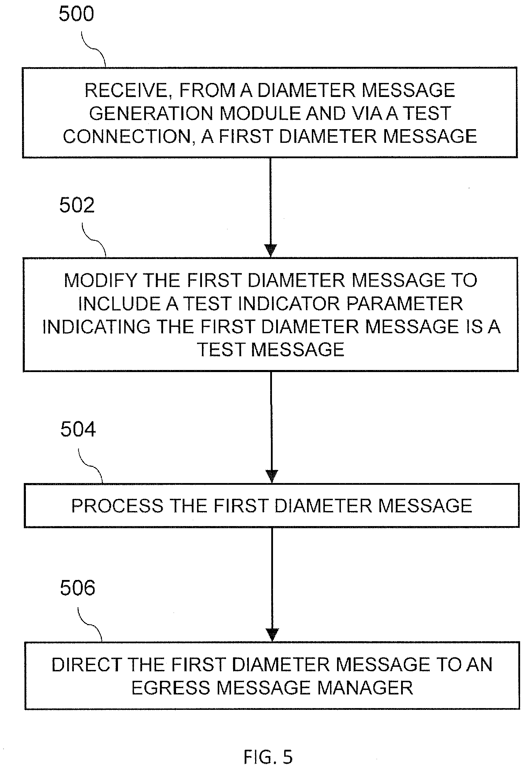

Figure 5 is a flow chart illustrating an exemplary process for testing a Diameter routing node according to an embodiment of the subject matter described herein. In some embodiments, the exemplary process described herein, or portions thereof, may be performed at or performed by DSR **106,** connection module **200,** processing module **202,** EMMM **204** and/or another module or node.

Referring to the embodiment illustrated in Figure 5, at step **500,** a first Diameter message may be received from a Diameter message generation module and via a test connection. For example, a Diameter message may be received by a connection module **200** from DMG module 112.

In some embodiments, the test connection may be associated with a long term evolution (LTE) interface, such as a LTE S1 interface.

In some embodiments, the Diameter message generation module may include a Diameter test message generator module or a Diameter peer node.

At step **502,** the first Diameter message may be modified to include a test indicator parameter indicating the first Diameter message is a test message. For example, the test indicator parameter may be a flag, bit, or other information stored in the first Diameter message.

At step **504,** the first Diameter message may be processed. For example, the first Diameter message may have firewall filtering rules or mediation rules applied. In this example, the rules applied may be different than rules applied to normal (e.g., non-test) Diameter messages.

In some embodiments, processing the first Diameter message may include adding information to, deleting information from, or modifying information contained in the first Diameter message.

In some embodiments, processing the first Diameter message may include generating a second Diameter message associated with the first Diameter message. In some embodiments, the second Diameter message may include a test indicator parameter indicating the second Diameter message is a test message. In some embodiments, the second Diameter message may be directed to the egress message manager.

At step **506,** the first Diameter message may be directed to an egress message manager. For example, the first Diameter message may be sent to EMMM **204** for further processing.

In some embodiments, egress message manager (e.g., EMMM **204**) may determine whether the first Diameter message is destined for a non-test-related destination. For example, in response to determining the first Diameter message is destined for test-related destination, the first Diameter message or information associated with the first Diameter message may be sent to the test-related destination. In another example, in response to determining the first Diameter message is not destined for a test-related destination, the first Diameter message may be prevented from reaching a destination that is not a test-related destination (e.g., the first Diameter message may be discarded).

In some embodiments, the egress message manager may be configured to extract information from the first Diameter message, discard the first Diameter message, and/or provide the extracted information (e.g., in a second Diameter message) to the test-related destination.

In some embodiments, the test-related destination may be a test analyzer node, an OAM node, and/or DMG module **112**

It will be understood that various details of the subject matter described herein may be changed without departing from the scope of the subject matter described herein. Furthermore, the foregoing description is for the purpose of illustration only, and not for the purpose of limitation.

## Claims

1. A method for testing a Diameter routing node (106), the method comprising:
at a Diameter routing node (106):
receiving (500), from a Diameter message generation module (112) external to the Diameter routing node (106) and via a test connection, a first Diameter message;
modifying (502), using a module within the Diameter routing node, the first Diameter message to include a test indicator parameter indicating the first Diameter message is a test message;
processing (504) the modified first Diameter message;
directing (506) the modified first Diameter message to an egress message manager (204) within the Diameter routing node; determining, at the egress message manager (204), whether the modified first Diameter message is destined for a test-related destination;
in response to determining the modified first Diameter message is destined for test-related destination, sending the modified first Diameter message or information associated with the modified first Diameter message to the test-related destination; and
in response to determining the modified first Diameter message is not destined for a test-related destination, preventing the modified first Diameter message from reaching a destination that is not a test-related destination.

2. The method of claim 1 wherein sending the modified first Diameter message or information associated with the modified first Diameter message to the test-related destination includes extracting information from the modified first Diameter message, discarding the modified first Diameter message, and providing the extracted information to the test-related destination.

3. The method of claim 1 wherein the test-related destination is a test analyzer node (114), an operations, administration, and management, OAM, node, or the Diameter message generation module.

4. The method of claim 1 wherein the test connection is associated with a long term evolution, LTE, interface.

5. The method of claim 1 wherein the Diameter message generation module (112) includes a Diameter test message generator module or a Diameter peer node.

6. The method of claim 1 wherein processing the modified first Diameter message includes adding information to, deleting information from, modifying information contained in the first Diameter message, or
generating a second Diameter message associated with the first Diameter message, wherein the second Diameter message includes a test indicator parameter indicating the second Diameter message is a test message, and wherein the second Diameter message is directed to the egress message manager (204).

7. A system for testing a Diameter routing node (106), the system comprising:
a Diameter routing node (106), the Diameter routing node (106) comprising:
an egress message manager (204);
a connection module (200) within the Diameter routing node configured to receive, from a Diameter message generation module (112) external to the Diameter routing node and via a test connection, a first Diameter message and to modify the first Diameter message to include a test indicator parameter indicating the first Diameter message is a test message; and
a processing module (202) configured to process the modified first Diameter message and to direct the modified first Diameter message to the egress message manager (204);
wherein the egress message manager (204) is configured to determine whether the modified first Diameter message is destined for a test-related destination, in response to determining the modified first Diameter message is destined for test-related destination, to send the modified first Diameter message or information associated with the modified first Diameter message to the test-related destination, and in response to determining the modified first Diameter message is not destined for a test-related destination, to prevent the modified first Diameter message from reaching a destination that is not a test-related destination.

8. The system of claim 7 wherein the egress message manager (204) is configured to extract information from the modified first Diameter message, discard the modified first Diameter message, and provide the extracted information to the test-related destination.

9. The system of claim 7 wherein the test-related destination is a test analyzer node (114), an operations, administration, and management, OAM, node, or the Diameter message generation module.

10. The system of claim 7 wherein the test connection is associated with a long term evolution, LTE, interface.

11. The system of claim 7 wherein the Diameter message generation module (112) includes a Diameter test message generator module or a Diameter peer node.

12. The system of claim 7 wherein the processing module (202) is configured to add information to, delete information from, modify information contained in the modified first Diameter message, or
to generate a second Diameter message associated with the first Diameter message, wherein the second Diameter message preferably includes a test indicator parameter indicating the second Diameter message is a test message, and wherein the processing module is preferably configured to direct the second Diameter message to the egress message manager (204).

13. A non-transitory computer readable medium having stored thereon executable instructions that when executed by the processor of a computer cause the processor to perform the method according to any of claims 1 to 6.

## Patentansprüche

1. Verfahren zum Testen eines Durchmesserroutingknotens (106), wobei das Verfahren Folgendes umfasst:
an einem Durchmesserroutingknoten (106):
Empfangen (500) einer ersten Durchmessernachricht von einem Durchmessernachrichten-Erzeugungsmodul (112) außerhalb des Durchmesserroutingknotens (106) und über eine Testverbindung;
Modifizieren (502) unter Verwendung eines Moduls innerhalb des Durchmesserroutingknotens der ersten Durchmessernachricht, so dass sie einen Testindikatorparameter umfasst, der anzeigt, dass die erste Durchmessernachricht eine Testnachricht ist;
Verarbeiten (504) der modifizierten ersten Durchmessernachricht;
Leiten (506) der modifizierten ersten Durchmessernachricht zu einem Ausgabenachrichtenmanager (204) innerhalb des Durchmesserroutingknotens;
Bestimmen an dem Ausgabenachrichtenmanager (204), ob die modifizierte erste Durchmessernachricht für ein Test-bezogenes Ziel bestimmt ist;
als Reaktion auf die Bestimmung, dass die modifizierte erste Durchmessernachricht für ein Test-bezogenes Ziel bestimmt ist, Senden der modifizierten ersten Durchmessernachricht oder von Informationen, die mit der geänderten ersten Durchmessernachricht verbunden sind, zu dem Test-bezogenen Ziel; und
als Reaktion auf die Bestimmung, dass die modifizierte erste Durchmessernachricht nicht für ein Test-bezogenes Ziel bestimmt ist, Verhindern, dass die modifizierte erste Durchmessernachricht ein Ziel erreicht, das kein Test-bezogenes Ziel ist.

2. Verfahren nach Anspruch 1, wobei das Senden der modifizierten ersten Durchmessernachricht oder von Informationen, die mit der geänderten ersten Durchmessernachricht verbunden sind, zu dem Test-bezogenen Ziel Folgendes umfasst: Extrahieren von Informationen aus der modifizierten ersten Durchmessernachricht, Löschen der modifizierten ersten Durchmessernachricht und Bereitstellen der extrahierten Informationen für das Test-bezogene Ziel.

3. Verfahren nach Anspruch 1, wobei das Test-bezogene Ziel ein Testanalysatorknoten (114), ein Operations-, Administrations- und Management-, OAM-, Knoten oder das Durchmessernachrichts-Erzeugungsmodul ist.

4. Verfahren nach Anspruch 1, wobei die Testverbindung mit einer Langzeit-Evolutions- (Long Term Evolution, LTE) Schnittstelle verbunden ist.

5. Verfahren nach Anspruch 1, wobei das Durchmessernachrichten-Erzeugungsmodul (112) ein Durchmessertestnachrichten-Erzeugermodul oder einen Durchmesser-Peer-Knoten umfasst.

6. Verfahren nach Anspruch 1, wobei die Verarbeitung der modifizierten ersten Durchmessernachricht Folgendes umfasst: Hinzufügen von Informationen zu der ersten Durchmessernachricht, Löschen von Informationen aus der ersten Durchmessernachricht, Modifizieren von Informationen, die in der ersten Durchmessernachricht enthalten sind, oder
Erzeugen einer zweiten Durchmessernachricht, die der ersten Durchmessernachricht zugeordnet ist, wobei die zweite Durchmessernachricht einen Testindikatorparameter umfasst, der anzeigt, dass die zweite Durchmessernachricht eine Testnachricht ist, und wobei die zweite Durchmessernachricht an den Ausgabenachrichtenmanager (204) gerichtet ist.

7. System zum Testen eines Durchmesserroutingknotens (106), wobei das System Folgendes umfasst:
einen Durchmesserroutingknoten (106), wobei der Durchmesserroutingknoten (106) Folgendes umfasst:
einen Ausgabenachrichtenmanager (204);
ein Verbindungsmodul (200) innerhalb des Durchmesserroutingknotens, das für Folgendes konfiguriert ist: Empfangen einer ersten Durchmessernachricht von einem Durchmessernachrichten-Erzeugungsmodul (112) außerhalb des Durchmesserroutingknotens und über eine Testverbindung und um die erste Durchmessernachricht zu modifizieren, um einen Testindikatorparameter anzugeben, der anzeigt, dass die erste Durchmessernachricht eine Testnachricht ist; und
ein Verarbeitungsmodul (202), das dafür konfiguriert ist, die modifizierte erste Durchmessernachricht zu verarbeiten und die modifizierte erste Durchmessernachricht zu dem Egress-Nachrichtenmanager (204) zu leiten;
wobei der Ausgabenachrichtenmanager (204) dafür konfiguriert ist, zu bestimmen, ob die modifizierte erste Durchmessernachricht für ein Test-bezogenes Ziel bestimmt ist, als Reaktion auf die Bestimmung, dass die modifizierte erste Durchmessernachricht für ein Test-bezogenes Ziel bestimmt ist, Senden der modifizierten ersten Durchmessernachricht oder von Informationen, die mit der geänderten ersten Durchmessernachricht verbunden sind, zu dem Test-bezogenen Ziel, und als Reaktion auf die Bestimmung, dass die modifizierte erste Durchmessernachricht nicht für ein Test-bezogenes Ziel bestimmt ist, Verhindern, dass die modifizierte erste Durchmessernachricht ein Ziel erreicht, das kein Test-bezogenes Ziel ist.

8. System nach Anspruch 7, wobei der Ausgabenachrichtenmanager (204) für Folgendes konfiguriert ist: Extrahieren von Informationen aus der modifizierten ersten Durchmessernachricht, Löschen der modifizierten ersten Durchmessernachricht und Bereitstellen der extrahierten Informationen für das Test-bezogene Ziel.

9. System nach Anspruch 7, wobei das Test-bezogene Ziel ein Testanalysatorknoten (114), ein Operations-, Administrations- und Management-, OAM-, Knoten oder das Durchmessernachrichts-Erzeugungsmodul ist.

10. System nach Anspruch 7, wobei die Testverbindung mit einer Langzeit-Evolutions- (Long Term Evolution, LTE) Schnittstelle verbunden ist.

11. System nach Anspruch 7, wobei das Durchmessernachrichten-Erzeugungsmodul (112) ein Durchmessertestnachrichten-Erzeugermodul oder einen Durchmesser-Peer-Knoten umfasst.

12. System nach Anspruch 7,| wobei das Verarbeitungsmodul (202) für Folgendes konfiguriert ist: Hinzufügen von Informationen zu der ersten Durchmessernachricht, Löschen von Informationen aus der ersten Durchmessernachricht, Modifizieren von Informationen, die in der modifizierten ersten Durchmessernachricht enthalten sind, oder
Erzeugen einer zweiten Durchmessernachricht, die der ersten Durchmessernachricht zugeordnet ist, wobei die zweite Durchmessernachricht vorzugsweise einen Testindikatorparameter umfasst, der anzeigt, dass die zweite Durchmessernachricht eine Testnachricht ist, und wobei das Verarbeitungsmodul vorzugsweise so konfiguriert ist, dass es die zweite Durchmessernachricht zu dem Ausgabenachrichtenmanager (204) leitet.

13. Nicht-transitorisches computerlesbares Medium, auf dem ausführbare Anweisungen gespeichert sind, die, wenn sie von dem Prozessor eines Computers ausgeführt werden, den Prozessor veranlassen, das Verfahren nach einem der Ansprüche 1 bis 6 durchzuführen.

## Revendications

1. Procédé pour l'essai d'un noeud de routage Diameter (106), le procédé consistant à :
au niveau d'un noeud de routage Diameter (106) :
recevoir (500), depuis un module de génération de messages Diameter (112) extérieur au noeud de routage Diameter (106) et par l'intermédiaire d'une connexion d'essai, un premier message Diameter ;
modifier (502), en utilisant un module au sein du noeud de routage Diameter, le premier message Diameter afin de comprendre un paramètre indicateur d'essai indiquant que le premier message Diameter est un message d'essai ;
traiter (504) le premier message Diameter modifié ;
diriger (506) le premier message Diameter modifié vers un gestionnaire de messages de sortie (204) au sein du noeud de routage Diameter ;
déterminer, au niveau du gestionnaire de messages de sortie (204), si le premier message Diameter modifié est destiné à une destination liée à un essai ;
en réponse à la détermination que le premier message Diameter modifié est destiné à une destination liée à un essai, envoyer le premier message Diameter modifié ou des informations associées au premier message Diameter modifié vers la destination liée à un essai ; et
en réponse à la détermination que le premier message Diameter modifié n'est pas destiné à une destination liée à un essai, empêcher le premier message Diameter modifié d'atteindre une destination qui n'est pas une destination liée à un essai.

2. Procédé selon la revendication 1 dans lequel l'envoi du premier message Diameter modifié ou des informations associées au premier message Diameter modifié vers la destination liée à un essai comprend l'extraction d'informations du premier message Diameter modifié, le rejet du premier message Diameter modifié, et la fourniture des informations extraites à la destination liée un essai.

3. Procédé selon la revendication 1 dans lequel la destination liée à un essai est un noeud analyseur d'essai (114), un module de fonctionnement, d'administration, et de gestion, d'OAM, de noeud, ou le module de génération de messages Diameter.

4. Procédé selon la revendication 1 dans lequel la connexion d'essai est associée à une interface à évolution à long terme, LTE.

5. Procédé selon la revendication 1 dans lequel le module de génération de messages Diameter (112) comprend un module générateur de messages d'essai Diameter ou un noeud pair à pair Diameter.

6. Procédé selon la revendication 1 dans lequel le traitement du premier message Diameter modifié comprend l'ajout d'informations au premier message Diameter, la suppression d'informations, la modification d'informations contenues dans le premier message Diameter, ou
la génération d'un second message Diameter associé au premier message Diameter, dans lequel le second message Diameter comprend un paramètre indicateur d'essai qui indique que le second message Diameter est un message d'essai, et dans lequel le second message Diameter est dirigé vers le gestionnaire de messages de sortie (204).

7. Système pour l'essai d'un noeud de routage Diameter (106), le système consistant en :
un noeud de routage Diameter (106), le noeud de routage Diameter (106) consistant en :
un gestionnaire de messages de sortie (204) ;
un module de connexion (200) au sein du noeud de routage Diameter configuré pour recevoir, depuis un module de génération de messages Diameter (112) extérieur au noeud de routage Diameter et par l'intermédiaire d'une connexion d'essai, un premier message Diameter et pour modifier le premier message Diameter afin de comprendre un paramètre indicateur d'essai qui indique que le premier message Diameter est un message d'essai ; et
un module de traitement (202) configuré pour traiter le premier message Diameter modifié et pour diriger le premier message Diameter modifié vers le gestionnaire de messages de sortie (204) ;
dans lequel le gestionnaire de messages de sortie (204) est configuré pour déterminer si le premier message Diameter modifié est destiné à une destination liée à un essai, en réponse à la détermination que le premier message Diameter modifié est destiné à une destination liée à un essai, pour envoyer le premier message Diameter modifié ou des informations associées au premier message Diameter modifié vers une destination liée à un essai, et en réponse à la détermination que le premier message Diameter modifié n'est pas destiné à une destination liée à un essai, pour empêcher le premier message Diameter modifié d'atteindre une destination qui n'est pas une destination liée un essai.

8. Système selon la revendication 7 dans lequel le gestionnaire de messages de sortie (204) est configuré pour extraire des informations du premier message Diameter modifié, rejeter le premier message Diameter modifié, et fournir les informations extraites à la destination liée à un essai.

9. Système selon la revendication 7 dans lequel la destination liée à un essai est un noeud analyseur d'essai (114), un module de fonctionnement, d'administration, et de gestion, d'OAM, de noeud, ou le module de génération de messages Diameter.

10. Système selon la revendication 7 dans lequel la connexion d'essai est associée à une interface à évolution à long terme, LTE.

11. Système selon la revendication 7 dans lequel le module de génération de messages Diameter (112) comprend un module générateur de messages d'essai Diameter ou un noeud pair à pair Diameter.

12. Système selon la revendication 7 dans lequel le module de traitement (202) est configuré pour ajouter des informations au premier message Diameter modifié, supprimer des informations ou modifier des informations contenues dans le premier message Diameter modifié, ou
pour générer un second message Diameter associé au premier message Diameter, dans lequel le second message Diameter comprend de préférence un paramètre indicateur d'essai qui indique que le second message Diameter est un message d'essai, et dans lequel le module de traitement est de préférence configuré pour diriger le second message Diameter vers le gestionnaire de messages de sortie (204).

13. Support non transitoire lisible par ordinateur ayant des instructions exécutables mémorisées à l'intérieur de celui-ci qui, lorsqu'elles sont exécutées par le processeur d'un ordinateur, amènent le processeur à réaliser le procédé selon l'une quelconque des revendications 1 à 6.
